# FASCICULE DE BREVET EUROPEEN

(11) **EP 2 771 524 B1**
(45) Date de publication et mention de la délivrance du brevet: **30.12.2015**
(21) Numéro de dépôt: 12790612.1
(22) Date de dépôt: 24.10.2012
(51) Int. Cl.: E04H 4/16, B08B 9/093, G05D 1/00

(54) **DISPOSITIF DE PILOTAGE À DISTANCE D'UN APPAREIL NETTOYEUR DE SURFACE IMMERGÉE ET APPAREIL AINSI PILOTÉ**
VORRICHTUNG ZUR FERNBEDIENUNG EINER VORRICHTUNG ZUR REINIGUNG EINER UNTERWASSEROBERFLÄCHE UND SO GESTEUERTE VORRICHTUNG
DEVICE FOR THE REMOTE CONTROL OF AN APPARATUS THAT CLEANS A SUBMERGED SURFACE AND APPARATUS THUS CONTROLLED

(30) Priorité: 27.10.2011 FR 1103275
(43) Date de publication de la demande: 03.09.2014
(73) Titulaire: Zodiac Pool Care Europe, 75009 Paris (FR)
(72) Inventeur: MICHELON, Thierry, F-31200 Toulouse (FR)
(74) Mandataire: Ipside
(86) Numéro de dépôt international: PCT/FR2012/052437
(87) Numéro de publication internationale: WO 2013/060982

(56) Documents cités:
- EP-A1- 1 122 382
- WO-A1-2004/019295
- US-A- 5 205 174
- US-A- 5 337 434
- US-A- 5 569 371

## Description

L'invention concerne un dispositif de pilotage à distance d'un appareil automobile nettoyeur de surface immergée dans un liquide, telle qu'une surface formée par les parois d'un bassin, notamment un bassin de piscine. L'invention concerne aussi un tel appareil automobile incluant un tel dispositif de pilotage à distance.

Des moyens de télécommander un appareil nettoyeur de bassin (ou robot de piscine) ont déjà été proposés. Ainsi, on connaît par exemple US 5,569,371 qui propose une télécommande à joystick permettant de contrôler les déplacements de l'appareil. Cependant ces robots ne sont en général télécommandés que pour leur faire enregistrer un domaine d'action ou une trajectoire prédéterminée qu'il devra parcourir pendant les phases de nettoyage automatique.

Les dispositifs de pilotage et les procédés qu'ils mettent en oeuvre n'ont pas été décrits. Or il est important que le pilotage à distance d'un tel appareil soit adapté car l'appareil évolue dans l'eau et répond donc différemment aux commandes de pilotage d'un utilisateur par rapport à des engins évoluant dans l'air (voiture, hélicoptère, avion, ...).

En effet un appareil immergé n'est pas aussi réactif qu'un véhicule terrestre et l'est beaucoup moins qu'un véhicule aérien. Il n'y a donc pas de risque de fausse manoeuvre et très peu de risque de collision en cas d'erreur de pilotage. L'appareil est aussi moins sensible aux faibles variations de vitesse ou d'orientation car son déplacement est généralement plus lent du fait de la viscosité élevée de l'eau.

De plus le contrôle de la position de l'appareil, par l'utilisateur, est visuel. Or l'appareil évolue souvent au fond d'un bassin et il est donc probable que la visibilité de l'appareil soit réduite (reflets sur l'eau, profondeur importante, relief des surfaces immergées difficiles à distinguer, eau trouble...).

En outre la plupart des télécommandes sont inadaptées pour une utilisation auprès ou dans une piscine car elles comportent des boutons, des joysticks, etc. qui sont des éléments mécaniques mobiles et qui posent donc des problèmes d'étanchéité du boîtier de télécommande.

L'invention vise donc à pallier ces inconvénients.

L'invention vise à proposer un dispositif de pilotage à distance d'un appareil nettoyeur immergé qui soit simple d'utilisation grâce à une interface conviviale.

L'invention vise à proposer un tel dispositif adapté à un appareil évoluant sous l'eau.

L'invention vise en particulier à proposer un dispositif procurant un pilotage simple et notamment permettant de reconnaître rapidement les déplacements de l'appareil sous l'eau afin de procurer un retour visuel fiable à l'utilisateur.

L'invention vise également à proposer un tel dispositif qui soit simple mécaniquement et électroniquement.

L'invention concerne donc un dispositif de pilotage à distance d'un appareil automobile nettoyeur de surface immergée, ledit appareil comprenant :
- un corps,
- un dispositif d'entraînement comprenant des organes de guidage et d'entraînement adaptés pour entraîner et guider le corps sur la surface immergée selon au moins une direction, dite direction longitudinale, et selon au moins deux modes de déplacement distincts,
ledit dispositif de pilotage à distance :
- comprenant un terminal de pilotage comportant au moins un boîtier,
- étant adapté pour pouvoir élaborer et transmettre au dispositif d'entraînement, via une liaison de communication, des signaux de commande du dispositif d'entraînement,
caractérisé en ce que :
- au moins un boîtier comprend un détecteur d'orientation, solidaire dudit boîtier, et adapté pour fournir des signaux représentatifs d'au moins un paramètre d'orientation du boîtier,
- il comprend en outre une unité de traitement des signaux fournis par le détecteur d'orientation, adaptée pour élaborer des signaux de commande représentatifs :
   - d'une première commande du dispositif d'entraînement pour un paramètre d'orientation compris dans un premier intervalle de valeurs prédéterminé,
   - d'une deuxième commande du dispositif d'entraînement, distincte de la première commande, pour un paramètre d'orientation compris dans un deuxième intervalle de valeurs prédéterminé, disjoint du premier intervalle.

Dans tout le texte un « mode de déplacement » décrit, au sens large, tous types de déplacements de l'appareil : ainsi par exemple un déplacement rectiligne à une première vitesse est un premier mode de déplacement, et un déplacement subséquent rectiligne selon la même direction et le même sens à une deuxième vitesse différente de la première vitesse est un deuxième mode de déplacement. A fortiori un déplacement courbe est un mode de déplacement différent d'un mode de déplacement correspondant à un déplacement rectiligne.

Des organes de guidage et d'entraînement selon l'invention peuvent être de différentes natures. En particulier un appareil selon l'invention peut être doté d'organe(s) de guidage (un jet d'eau orienté par exemple) indépendant(s) d'organes d'entraînement (des roues par exemple), ou d'organes assurant les deux fonctions à la fois : par exemple des roues, des chenilles, etc.

Un dispositif selon l'invention s'applique avantageusement à un appareil nettoyeur comportant une chambre de filtration ménagée dans ledit corps et présentant :
- au moins une entrée de liquide dans le corps,
- au moins une sortie de liquide hors du corps,
- un circuit hydraulique de circulation de liquide entre chaque entrée de liquide et chaque sortie de liquide à travers un dispositif de filtrage.

Le corps de l'appareil est avantageusement un corps creux pour pouvoir accueillir les différents organes nécessaires au fonctionnement de l'appareil. Avantageusement le corps creux présente des cavités étanches par submersion de l'appareil afin d'abriter des éléments sensibles à l'eau, par exemple des éléments électriques et/ou électroniques.

Un dispositif selon l'invention s'applique avantageusement à un appareil nettoyeur propulsé électriquement, c'est-à-dire dont le dispositif d'entraînement comprend des moteurs électriques d'entraînement et d'orientation d'organes d'entraînement et de guidage. Cependant un dispositif selon l'invention ne se limite pas aux appareils nettoyeurs propulsés électriquement et s'étend à d'autres types d'appareils, par exemple à des appareils hydrauliques dont on pilote à distance un jet d'eau par exemple en puissance et en orientation, et/ou un appareil équipé de ballast, etc.

Le dispositif de pilotage à distance d'un appareil nettoyeur de surface immergée selon l'invention propose un pilotage simple et naturel qui permet un pilotage à distance approprié d'un appareil immergé dans un liquide.

Une liaison de communication entre un dispositif de pilotage à distance selon l'invention et un dispositif d'entraînement d'un d'appareil nettoyeur est adaptée pour transmettre les signaux de commande élaborés par l'unité de commande au dispositif d'entraînement de l'appareil. Une telle liaison de communication peut comporter plusieurs types d'éléments tels que : antenne(s) émettrice(s), antenne(s) réceptrice(s), unité(s) électronique(s) intermédiaire(s), port(s) d'entrée, port(s) de sortie, etc. En particulier une liaison de communication entre un dispositif selon l'invention et un appareil selon l'invention peut être filaire, sans fil ou mixte. Tout ou partie de ces éléments est avantageusement compris dans un dispositif selon l'invention, en particulier dans un terminal de pilotage selon l'invention, ou dans un appareil nettoyeur selon l'invention.

En effet, les inventeurs ont déterminé qu'afin de rendre le pilotage plus simple d'utilisation et plus convivial, l'utilisation d'un détecteur d'orientation (c'est-à-dire d'inclinaison) du terminal de pilotage est avantageuse.

Un terminal de pilotage selon l'invention comprend un ou plusieurs boîtier(s). Il est notamment constitué d'une ou plusieurs télécommande(s) (ou manette(s) de contrôle) comportant chacune un boîtier et un détecteur d'orientation dudit boîtier. Un tel terminal comprend en particulier avantageusement un unique boîtier.

Un paramètre d'orientation est une donnée relative à l'orientation d'un axe du boîtier dont on détecte l'inclinaison : il peut s'agir notamment de l'inclinaison, de la variation de l'inclinaison, ou d'une accélération en inclinaison selon un axe donné.

Un détecteur d'orientation selon l'invention fournit des données relatives à au moins un paramètre d'orientation. Le détecteur d'orientation comprend avantageusement un ou plusieurs capteurs d'orientation adaptés pour détecter l'inclinaison d'au moins une direction fixe du boîtier par rapport à un axe supposé fixe dans le référentiel choisi (par exemple la verticale locale dans un référentiel terrestre). Lesdites directions fixes peuvent avantageusement être choisies selon des axes géométriques du boîtier (longueur, largeur, ...).

Tous types de capteurs d'orientation peuvent être envisagés : gyromètre, gyroscope, inclinomètre, accéléromètre,... Ainsi on peut mesurer l'orientation (ou attitude) absolue d'un boîtier du terminal de pilotage par exemple par rapport à la verticale, c'est-à-dire par rapport au champ de gravité terrestre local.

Cependant, de tels capteurs d'orientation fournissent des mesures très sensibles et précises.

Or le pilotage d'un appareil immergé ne requiert pas une précision aussi importante que le pilotage d'un hélicoptère par exemple. Cela est d'autant plus vrai que, l'appareil évoluant généralement sur une surface, son attitude en tangage et en roulis dépend uniquement de l'orientation de la normale à la surface immergée sur laquelle il se trouve, de sorte que seules sa vitesse et son orientation en lacet peuvent être pilotées.

Les inventeurs ont déterminé qu'il s'agit au contraire d'être capable, pour un utilisateur, d'apprécier distinctement les déplacements de l'appareil, même au travers d'eaux profondes ou troubles. Cette contrainte implique donc d'appliquer des commandes simples et de grande amplitude à l'appareil : un seul rayon de rotation à droite, un seul rayon de rotation à gauche, seulement deux vitesses de marche avant, etc. afin que l'utilisateur puisse s'assurer simplement que le robot suit effectivement ses instructions.

Cependant cette caractéristique est a priori incompatible avec un détecteur d'orientation qui fournit des données représentatives de paramètres d'orientation précises et sensibles de l'orientation d'un boîtier du terminal.

C'est pourquoi, pour la première fois et conformément à l'invention, les données représentatives de paramètres d'orientation fournies par le détecteur d'orientation sont simplifiées par l'unité de traitement. En effet, les inventeurs ont divisé l'espace complet des valeurs pouvant être atteintes par chaque paramètre d'orientation en un nombre fini d'intervalles de valeurs et ont programmé l'unité de traitement en conséquence. Ainsi, à chaque paramètre d'orientation correspond un nombre fini prédéterminé d'intervalles.

Pour toutes valeurs prises par un paramètre d'orientation dans un même intervalle prédéterminé, une seule et même commande de pilotage est envoyée à l'appareil.

En particulier, l'espace de l'ensemble des valeurs pouvant être atteint par un paramètre d'orientation est avantageusement divisé en un nombre inférieur ou égal à six intervalles, en particulier un nombre inférieur ou égal à trois intervalles.

Les valeurs de borne de chaque intervalle prédéterminé pour chaque paramètre d'orientation selon l'invention sont avantageusement enregistrées de façon permanente dans une mémoire non-volatile de l'unité de traitement ou à laquelle cette dernière a accès.

Dans un appareil selon l'invention, le nombre de commandes de pilotage différentes pouvant être envoyées à l'appareil est limité et chaque changement de commande de pilotage correspond à un changement d'un mode de déplacement à un autre présentant des différences notables afin de pouvoir être visualisées par un utilisateur à travers l'eau d'un bassin. Le nombre de commandes de pilotage différentes (avant, arrière, avant-gauche, avant-droite, gauche, droite, etc.) pouvant être élaborées par l'unité de traitement est avantageusement inférieur à vingt-quatre, en particulier il est avantageusement inférieur ou égal à treize.

En particulier, avantageusement et selon l'invention l'unité de traitement est adaptée pour élaborer des signaux de commande représentatifs d'une commande prédéterminée du dispositif d'entraînement pour au moins un paramètre d'orientation compris dans un intervalle de valeurs prédéterminé, l'intervalle étant un intervalle d'un groupe d'intervalles disjoints, le groupe d'intervalles couvrant l'ensemble des valeurs pouvant être atteintes par ledit paramètre d'orientation.

Ainsi, toute valeur d'un paramètre d'orientation appartient nécessairement dans un intervalle de valeurs prédéterminé, ledit intervalle correspondant à une commande de pilotage prédéterminée. L'unité de traitement compare donc la valeur de chaque paramètre d'orientation à des valeurs formant les bornes des intervalles relatifs audit paramètre d'orientation afin d'élaborer un signal de commande correspondant à l'intervalle dans lequel le paramètre d'orientation se trouve à un instant donné.

Le traitement de chaque paramètre d'orientation par l'unité de traitement est une application surjective. En effet, une seule et même commande est obtenue par plusieurs valeurs distinctes d'un paramètre d'orientation comprises dans un intervalle de valeur prédéterminé donné.

En particulier, avantageusement, le nombre d'intervalles de valeur pour un paramètre d'orientation donné est inférieur à dix, en particulier inférieur ou égal à cinq.

En outre, les intervalles de valeur pour un paramètre d'orientation donné (par exemple le tangage du terminal de pilotage) peuvent être dépendants de la valeur prise par un ou plusieurs autre(s) paramètre(s) d'orientation (par exemple le roulis du terminal de pilotage).

Avantageusement et selon l'invention, un premier paramètre d'orientation dudit boîtier est une mesure en tangage du boîtier.

De plus, avantageusement et selon l'invention, l'unité de traitement est adaptée pour pouvoir élaborer des signaux de commande représentatifs :
- d'une première commande correspondant à un entraînement du corps dans un premier sens selon la direction longitudinale, pour une mesure en tangage dudit boîtier comprise dans un premier intervalle de valeurs prédéterminé,
- d'une deuxième commande correspondant à une immobilisation du corps, pour une mesure en tangage dudit boîtier comprise dans un deuxième intervalle de valeurs prédéterminé, différent du premier intervalle,
- d'une troisième commande correspondant à un entraînement du corps dans un second sens, opposé au premier sens, selon la direction longitudinale, pour une mesure en tangage dudit boîtier comprise dans un troisième intervalle de valeurs prédéterminé, différent du premier et du deuxième intervalle.

En particulier, avantageusement et selon l'invention, l'espace des valeurs en tangage du boîtier est divisé en cinq intervalles correspondant chacun à une commande en entraînement différente du dispositif d'entraînement. Notamment, avantageusement et selon l'invention lesdits cinq intervalles correspondent à des commandes :
- à une première vitesse et à une seconde vitesse distincte de la première vitesse dans un premier sens selon la direction longitudinale, par exemple en marche avant,
- à une première vitesse et à une seconde vitesse distincte de la première vitesse dans un second sens selon la direction longitudinale, distinct du premier sens selon la direction longitudinale, par exemple en marche arrière,
- à une immobilisation du corps.

Avantageusement, un boîtier de terminal selon l'invention présente une face avant et une face arrière distinguables par un utilisateur, de sorte qu'un utilisateur peut déterminer facilement dans quel sens incliner - en tangage - le boîtier pour commander l'appareil en déplacement dans un sens avant ou arrière selon la direction longitudinale. La mesure de l'inclinaison en tangage équivaut à une mesure d'angle de rotation autour d'un axe transversal (de gauche à droite) du boîtier.

Ainsi, en divisant l'espace des valeurs en tangage (inclinaison d'avant en arrière ou d'arrière en avant) du boîtier en cinq on peut obtenir cinq commandes en entraînement distinctes de l'appareil en fonction de l'inclinaison en tangage dudit boîtier. Par exemple :
- une inclinaison très faible par rapport à une direction fixe du référentiel (par exemple la verticale donnée par l'accélération de la gravité) peut correspondre à une immobilisation du corps de l'appareil sur la surface immergée,
- une inclinaison modérée vers l'avant peut correspondre à une commande à une vitesse faible en marche avant,
- une forte inclinaison vers l'avant peut correspondre à une commande à une vitesse élevée en marche avant,
- une inclinaison modérée vers l'arrière peut correspondre à une commande à une vitesse faible en marche arrière,
- une forte inclinaison vers l'arrière peut correspondre à une commande à une vitesse élevée en marche arrière.

Ainsi, pour un paramètre d'orientation en tangage d'un boîtier de télécommande, les instructions de commande en entraînement de l'appareil sont avantageusement acquises.

Aussi, avantageusement et selon l'invention, un deuxième paramètre d'orientation dudit boîtier est une mesure en roulis du boîtier.

Avantageusement et selon l'invention, l'unité de traitement est adaptée pour pouvoir élaborer des signaux de commande représentatifs :
- d'une première commande correspondant à un guidage du corps dans un premier sens de giration en lacet, pour une mesure en roulis dudit boîtier comprise dans un premier intervalle de valeurs prédéterminé,
- d'une deuxième commande correspondant à un guidage du corps tout droit selon la direction longitudinale, sans giration en lacet, pour une mesure en roulis dudit boîtier comprise dans un deuxième intervalle de valeurs prédéterminé, différent du premier intervalle,
- d'une troisième commande correspondant à un guidage du corps dans un second sens de giration en lacet, opposé au premier sens de giration, pour une mesure en roulis dudit boîtier comprise dans un troisième intervalle de valeurs prédéterminé, différent du premier et du deuxième intervalle.

En particulier, avantageusement et selon l'invention, l'espace des valeurs en roulis du boîtier est divisé en cinq intervalles correspondant chacun à une commande en guidage différente du dispositif d'entraînement. Notamment, avantageusement et selon l'invention lesdits cinq intervalles correspondent à des commandes :
- à un premier rayon de braquage (ou rayon de rotation) et à un second rayon de braquage distinct du premier rayon de braquage dans un premier sens de rotation en lacet, par exemple à gauche,
- à un premier rayon de braquage (ou rayon de rotation) et à un second rayon de braquage distinct du premier rayon de braquage dans un second sens de rotation en lacet, par exemple à droite,
- à un guidage rectiligne du corps.

Un premier rayon de braquage est par exemple obtenu par un entraînement en marche avant ou arrière simultané à un guidage en rotation modéré. Un second rayon de braquage est par exemple obtenu par une rotation sur place.

Avantageusement, un boîtier de terminal selon l'invention présente un côté gauche et un côté droit facilement distinguables par un utilisateur, de sorte qu'un utilisateur peut déterminer facilement dans quel sens incliner - en roulis - le boîtier pour commander l'appareil dans un sens de rotation en lacet à gauche ou à droite. La mesure de l'inclinaison en roulis équivaut à une mesure d'angle de rotation autour d'un axe longitudinal (d'arrière en avant) du boîtier.

Ainsi, en divisant l'espace des valeurs en roulis (inclinaison de gauche à droite ou de droite à gauche) du boîtier en cinq on peut obtenir cinq commandes en guidage distinctes de l'appareil en fonction de l'inclinaison en roulis dudit boîtier. Par exemple :
- une inclinaison très faible par rapport à une direction fixe du référentiel (par exemple la verticale donnée par l'accélération de la gravité) peut correspondre à un guidage en ligne droite du corps de l'appareil sur la surface immergée,
- une inclinaison modérée vers la droite peut correspondre à une commande à un rayon de braquage long à droite,
- une forte inclinaison vers la droite peut correspondre à une commande à un rayon de braquage court à droite, notamment à une rotation sur place,
- une inclinaison modérée vers la gauche peut correspondre à une commande à un rayon de braquage long à gauche,
- une forte inclinaison vers la gauche peut correspondre à une commande à un rayon de braquage court à gauche, notamment à une rotation sur place.

Ainsi, pour un paramètre d'orientation en roulis d'un boîtier de télécommande, les instructions de commande en lacet de l'appareil sont avantageusement acquises.

L'ensemble des valeurs pouvant être atteintes par chacun des paramètres d'orientation en tangage et en roulis est de 360 degrés : 180° de chaque côté (avant, arrière, gauche et droite) d'un axe fixe du référentiel, par exemple la verticale pour un axe du boîtier de télécommande qui est vertical au repos. Ces deux espaces de valeurs de 360° peuvent être divisés chacun en cinq intervalles, chaque intervalle d'un premier des deux espaces correspondant à une commande en entraînement du dispositif d'entraînement, et chaque intervalle du second espace des deux espaces correspondant à une commande en guidage du dispositif d'entraînement :

| Intervalle | Commande en entraînement pour une mesure en tangage | Commande en guidage pour une mesure en roulis |
|---|---|---|
| [-180°, -90° [ | Marche arrière rapide | Rotation sur place à gauche |
| [-90°, -30° [ | Marche arrière lente | Rotation modérée à gauche |
| [-30°, +30°[ | Arrêt | Tout droit |
| [+30°, +90° [ | Marche avant lente | Rotation modérée à droite |
| [+90°, +180°[ | Marche avant rapide | Rotation sur place à droite |

Dans tout le texte les angles sont comptés positivement lorsque le boîtier est incliné vers l'avant pour une mesure en tangage et vers la droite pour une mesure en roulis. Ils sont comptés négativement respectivement vers l'arrière en tangage et vers la gauche en roulis.

Deux intervalles adjacents sont avantageusement disjoints, c'est-à-dire qu'ils ne comportent pas de valeur en commun. L'ensemble des valeurs pouvant être atteintes par un paramètre d'orientation étant inclues dans l'ensemble desdits intervalles, la valeur limite entre deux intervalles adjacents est incluse dans l'un des deux intervalles adjacents (borne fermée), et ne l'est pas dans le second des deux intervalles adjacents (borne ouverte).

L'unité de traitement peut élaborer des signaux de commande représentatifs d'une combinaison d'une commande en entraînement et d'une commande en guidage, soit par exemple : pour un angle en tangage de 20° et pour un angle en roulis de -45°, l'unité de traitement élabore des signaux de commande représentatifs d'une commande « marche avant lente avec rotation modérée à gauche ».

De plus, l'un des deux paramètres d'orientation peut dépendre de la valeur de l'autre paramètre d'orientation. Ainsi, par exemple, quelque soit la valeur du paramètre d'orientation en tangage, pour un paramètre d'orientation en roulis compris dans [-180°, -90°[ ou [+90°, +180°[, une commande de rotation sur place est envoyée sans commande en entraînement (lorsque l'appareil est tel que ses organes d'entraînement et de guidage permettent une rotation sur place, notamment une rotation sur place sans nécessiter de déplacement simultané).

En général, pour la plupart des appareils nettoyeurs de surface immergée du commerce il n'est pas nécessaire de faire la distinction entre commande en entraînement et commande en guidage, notamment lorsque les mêmes organes assurent à la fois l'entraînement et le guidage. C'est par exemple le cas lorsque les organes d'entraînement sont des roues dont au moins un certain nombre est orientable en lacet. Dans ce cas, les signaux de commande élaborés par l'unité de traitement sont représentatifs d'une commande particulière pour l'entraînement et le guidage de l'appareil. C'est encore plus vrai lorsque l'appareil dispose de roues non orientables, mais assurant toutefois à la fois pour partie la propulsion et le guidage de l'appareil, notamment en régulant la vitesse de rotation des roues situées d'un même côté ; par exemple des roues situées du côté gauche tournant dans le même sens que des roues côté droit, mais à une vitesse différente permet d'obtenir un déplacement et une rotation de l'appareil selon un rayon de braquage non nul. De même, en entraînant en sens contrarotatifs les roues côté gauche des roues côté droit, on obtient une rotation sur place selon un rayon de braquage nul.

Pour cinq intervalles de valeurs sur chacun de deux paramètres d'orientation l'unité de traitement peut donc élaborer vingt-cinq types de commandes distinctes (chacune représentative d'un mode de déplacement particulier combinant entraînement et guidage). Avantageusement elle n'élabore que treize types de commandes distinctes : chaque vitesse de marche arrière et de marche avant peut être rectiligne ou avec une rotation modérée à gauche ou à droite, chaque commande de rotation sur place est indépendante de la valeur du paramètre d'orientation en tangage, et une seule commande d'immobilisation.

Par ailleurs, avantageusement et selon l'invention, le détecteur d'orientation est un dispositif accélérométrique.

Avantageusement et selon l'invention, le dispositif accélérométrique est un accéléromètre trois axes.

De tels accéléromètres sont courants dans le commerce et sont peu coûteux. De plus, ils permettent d'obtenir des mesures selon un, deux ou trois axes d'orientation du boîtier.

Le dispositif accélérométrique est en fait avantageusement utilisé dans une fonction d'inclinomètre permettant la mesure de l'orientation de chaque axe d'attitude (tangage et roulis notamment) de la télécommande par rapport au champ de gravité de la Terre. Le dispositif accélérométrique est en particulier adapté pour fournir des mesures d'au moins deux composantes de l'accélération de la gravité terrestre selon deux axes d'attitude du boîtier.

De plus, avantageusement et selon l'invention, chaque boîtier est étanche. Un tel boîtier étant destiné à être utilisé à proximité ou dans un bassin, l'étanchéité du boîtier permet à la fois d'assurer l'intégrité des éléments électroniques du terminal de pilotage, et d'éviter tout risque électrique pour un utilisateur.

En particulier le boîtier ne comporte avantageusement aucun bouton, de sorte qu'il ne comporte pas de pièce mécanique mobile, et que son étanchéité est d'autant plus sûre.

Son étanchéité étant ainsi facilement assurée, on peut prévoir une télécommande utilisable dans une piscine.

Aussi, avantageusement et selon l'invention, le boîtier est adapté pour flotter à la surface de l'eau lorsqu'il est plongé dans l'eau.

La récupération d'une telle télécommande tombée dans l'eau, notamment dans une piscine, est ainsi plus aisée.

Le volume de la télécommande et le matériau de son boîtier peuvent en particulier être choisis pour qu'elle soit flottante.

Avantageusement et selon l'invention, chaque boîtier comprenant un détecteur d'orientation est aussi doté de :
- une unité de traitement,
- un émetteur sans fil relié à l'unité de traitement et adapté pour émettre sans fil des signaux de commande élaborés par l'unité de traitement.

Ainsi, un terminal de pilotage selon l'invention comprend au moins un boîtier équipé d'un détecteur d'orientation, d'une unité de traitement des signaux fournis par le détecteur d'orientation adaptée pour élaborer des signaux de commande du dispositif d'entraînement de l'appareil à partir des signaux fournis par le détecteur d'orientation, et d'un émetteur sans fil pour émettre sans fil les signaux de commande élaborés par l'unité de traitement. Chaque boîtier est donc une télécommande sans fil.

Un émetteur sans fil peut utiliser des technologies du type radiofréquences (Bluetooth®, Wifi, etc.), infrarouge, etc. En particulier rien n'empêche d'utiliser, en tant que télécommande, un téléphone mobile ou un ordinateur, équipé d'un détecteur d'orientation et d'un émetteur sans fil, et sur lequel un programme informatique a été installé afin de permettre l'élaboration de signaux de commande conformément à l'invention à partir des signaux fournis par son propre détecteur d'orientation puis l'émission de ces signaux par l'un de ses moyens de communication sans fil.

Un dispositif selon l'invention comprend en outre avantageusement un relais intermédiaire comprenant une antenne de réception des signaux de commande émis par ledit émetteur sans fil, et relié à l'appareil nettoyeur par un câble adapté pour :
- être au moins partiellement immergé,
- pouvoir transmettre des signaux de commande.

Le relais intermédiaire assure une liaison entre signaux de commande sans fil à l'extérieur du bassin, et signaux de commande filaires dans le bassin. En effet la transmission dans l'eau de la plupart des signaux sans fil est faible. C'est pourquoi l'appareil est avantageusement relié au relais intermédiaire par un câble.

Ledit câble peut contenir au moins un fil dédié à la transmission de signaux de commande. Alternativement, si le câble comporte deux fils d'alimentation en puissance électrique de l'appareil, les signaux de commande peuvent être transmis par courant porteur sur ces fils d'alimentation.

Un tel relais intermédiaire peut avantageusement être disposé sur une berge du bassin ou être flottant. Un relais intermédiaire flottant est avantageusement relié par un câble au corps de l'appareil. Notamment un relais intermédiaire flottant est tiré par l'appareil et donc se déplace à la surface de l'eau lorsque l'appareil se déplace dans le bassin. Ce relais intermédiaire peut être autoalimenté et même fournir de l'énergie à l'appareil nettoyeur, par exemple en étant équipé de panneaux photovoltaïques.

Avantageusement et selon l'invention, l'appareil nettoyeur comprend en outre une unité électronique de contrôle adaptée pour :
- commander le dispositif d'entraînement selon au moins un programme de nettoyage enregistré dans une mémoire,
- sur réception de signaux de commande, inhiber un programme de nettoyage en cours pour commander le dispositif d'entraînement selon lesdits signaux de commande.

L'unité électronique de contrôle de l'appareil nettoyeur est avantageusement à bord de l'appareil, dans le corps de l'appareil, mais peut aussi être dans le relais intermédiaire, la seule liaison entre le relais intermédiaire et l'appareil nettoyeur étant alors avantageusement une liaison de puissance électrique commandée depuis le relais intermédiaire l'unité électronique de contrôle.

En variante avantageuse lorsque le terminal de pilotage est relié directement par fil à l'appareil, l'unité de traitement peut être reliée au dispositif d'entraînement de sorte à le commander en puissance directement, sans unité électronique de contrôle ni relais intermédiaire interposés.

L'invention concerne également un dispositif de pilotage à distance caractérisé en combinaison par tout ou partie des caractéristiques mentionnées ci-dessus ou ci-après.

L'invention s'étend également à un procédé mis en oeuvre par un dispositif de pilotage à distance selon l'invention.

L'invention s'étend en outre à un programme informatique comprenant des instructions de code informatique pour exécuter un tel procédé lorsqu'il est chargé et exécuté sur un terminal de pilotage informatique tel qu'un téléphone mobile ou un ordinateur.

L'invention s'étend aussi à un appareil automobile nettoyeur de surface immergée comprenant :
- un corps,
- un dispositif d'entraînement comprenant des organes de guidage et d'entraînement adaptés pour entraîner et guider le corps sur la surface immergée selon au moins une direction, dite direction longitudinale, et selon au moins deux modes de déplacement distincts,
- un dispositif de pilotage à distance selon l'invention,
- une liaison de communication entre ledit dispositif de pilotage à distance et ledit dispositif d'entraînement adapté pour permettre au moins la transmission de signaux de commande entre le dispositif de pilotage à distance et le dispositif d'entraînement.

Avantageusement un appareil selon l'invention, est un appareil électrique c'est-à-dire dont le dispositif d'entraînement comprend des moteurs électriques d'entraînement des organes d'entraînement et de guidage de l'appareil. Ainsi, avantageusement et selon l'invention, l'unité électronique de contrôle à bord de l'appareil ou dans le relais intermédiaire commande en puissance les moteurs électriques.

L'invention concerne également un appareil automobile nettoyeur de surface immergée caractérisé en combinaison par tout ou partie des caractéristiques mentionnées ci-dessus ou ci-après.

D'autres buts, caractéristiques et avantages de l'invention apparaîtront à la lecture de la description suivante donnée à titre non limitatif et qui se réfère aux figures annexées dans lesquelles :
- la figure 1 est une représentation schématique d'un dispositif de pilotage à distance selon un mode de réalisation conforme à l'invention, mis en oeuvre par un utilisateur pour piloter à distance un appareil nettoyeur selon l'invention,
- la figure 2 est un schéma synoptique fonctionnel du mode de réalisation du dispositif de la figure 1,
- la figure 3 est une représentation schématique d'un terminal de pilotage selon l'invention dont la façade avant est représentée en arraché pour faire apparaître ses composants essentiels,
- la figure 4 est une représentation schématique simplifiée en deux dimensions des intervalles de valeur et des commandes correspondantes dans un dispositif et un procédé de pilotage à distance conformes à l'invention,
- la figure 5 est une représentation schématique en trois dimensions des intervalles de valeur et des commandes correspondantes dans un dispositif et un procédé de pilotage à distance conformes à l'invention.

Un dispositif de pilotage à distance selon l'invention d'un appareil 1 selon l'invention comprend avantageusement un terminal de pilotage sous la forme d'une télécommande 15 autoalimentée comprenant à cet effet une batterie 11 pouvant être rechargeable ou interchangeable.

Le dispositif de pilotage à distance selon l'invention comprend aussi un dispositif de transmission adapté pour établir une liaison de communication entre le terminal de pilotage et le dispositif d'entraînement de l'appareil. Le dispositif de transmission comporte un émetteur sans fil 24 dans ladite télécommande, un relais 17 intermédiaire installé en bord d'un bassin 13 de piscine et relié par un câble 51 à l'appareil 1 nettoyeur, immergé dans le bassin.

Ainsi, la télécommande 15 transmet, grâce à son émetteur sans fil 24 des signaux de commande 16 par radiofréquences.

Les signaux de commande 16 sont élaborés par une unité de traitement 23 de la télécommande, à partir des signaux délivrés par un détecteur d'orientation 22.

Le détecteur d'orientation 22 comprend trois capteurs accélérométriques selon trois directions orthogonales entre elles. Chaque capteur accélérométrique est un capteur du type capacitif, choisi pour son bas coût de production. Cependant d'autres types de capteurs d'orientation, notamment de capteurs accélérométriques peuvent être choisis dans le cadre de l'invention.

Le détecteur d'orientation 22 fournit des mesures d'inclinaison du boîtier 43, notamment par rapport au champ de gravité local. Il assure donc la fonction d'un inclinomètre.

L'unité de traitement 23 traite les signaux fournis par le détecteur d'orientation 22 selon deux axes du boîtier 43 de télécommande 15 : un axe de tangage 26 (inclinaison vers l'avant ou vers l'arrière) et un axe de roulis 27 (inclinaison vers la droite ou vers la gauche).

Lorsque la télécommande est à portée du relais intermédiaire 17, les signaux de commande 16 sans fil qu'elle émet sont reçus par une antenne 25 de réception du relais intermédiaire 17. Les signaux reçus par l'antenne 25 de réception sont traités par un microprocesseur 47 puis des signaux de commande de l'unité électronique de contrôle 21 de l'appareil sont émis via l'interface de communication 48 par le câble 51 relié au corps 44 de l'appareil.

Le relais intermédiaire 17 comprend aussi une interface homme/machine 50 et une unité électronique de gestion 49 de cette interface interposée entre ladite interface 50 et le microprocesseur 47.

Le relais intermédiaire comprend en outre une alimentation 12 électrique adaptée pour être reliée à un réseau de distribution d'électricité. Cette alimentation 12 alimente les différents éléments électriques/électroniques du relais intermédiaire 17 à une tension appropriée, et alimente aussi l'appareil nettoyeur par le câble 51 à une tension appropriée.

Le câble 51 comporte donc au moins deux fils d'alimentation en énergie électrique, et un fil de transmission bidirectionnelle de signaux de commande.

Sur réception des signaux de commande l'appareil met en oeuvre les commandes que lesdits signaux de commande représentent. Les signaux de commande 16 sont des signaux de commande d'un dispositif d'entraînement 45 à bord d'un appareil nettoyeur selon l'invention. Le dispositif d'entraînement 45 comprend au moins un convertisseur de puissance 20 relié en entrée à l'unité électronique de contrôle 21.

L'unité électronique de contrôle 21 envoie des signaux de puissance au convertisseur de puissance 20 élaborés à partir des signaux de commande qu'elle reçoit via le câble 51 de liaison avec le relais intermédiaire 17 lorsqu'elle en reçoit, et sinon à partir d'un programme mémorisé dans une mémoire 42 à bord en l'absence de signaux de commande issus de la télécommande. Le convertisseur de puissance 20 est relié en sortie aux moteurs 19 d'entraînement de sorte à leur fournir une puissance d'alimentation électrique correspondant aux signaux de puissance reçus de l'unité électronique de contrôle 21.

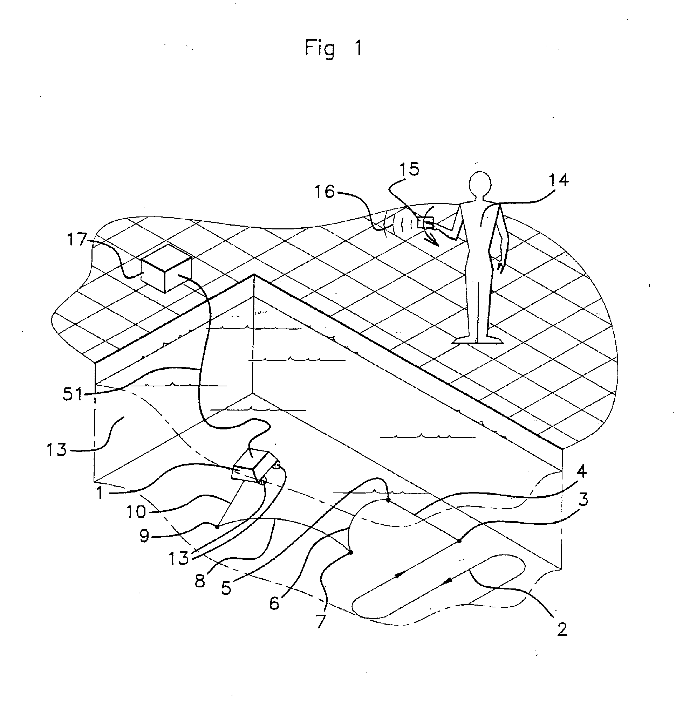

L'appareil 1 selon le mode de réalisation présenté à la figure 1 est un appareil alimenté électriquement par le câble 51 de liaison avec le relais intermédiaire 17 lui relié électriquement à un réseau de distribution électrique.

L'appareil 1 comporte deux axes d'essieu au moins sensiblement parallèles entre eux, chacun doté d'au moins une roue motrice décalée latéralement d'un premier côté du corps 44 de l'appareil 1 et d'au moins une roue motrice décalée d'un deuxième côté du corps latéralement opposé au premier côté du corps. L'appareil comporte donc quatre roues 18 motorisées électriquement et réparties deux à deux de chaque côté du corps de l'appareil.

Chaque groupe de roues situées latéralement d'un même côté du corps 44 de l'appareil est entraîné par un unique moteur électrique 19 de sorte que le sens de rotation et la vitesse de rotation peuvent être contrôlés indépendamment pour chaque groupe de roues. Ainsi la variation des sens et vitesses de rotation de chaque groupe de roues 18 permet d'entraîner et de guider l'appareil sur les surfaces immergées du bassin.

En particulier la commande en sens contrarotatifs des roues situées du premier côté (gauche par exemple) de l'appareil et des roues situées du deuxième côté (respectivement droit) de l'appareil permet d'obtenir une rotation sur place de l'appareil. La commande de toutes les roues 18 dans le même sens à des vitesses différentes à droite et à gauche permet de faire tourner l'appareil pendant son déplacement selon un rayon de braquage non nul. Une direction longitudinale d'entraînement préférentiel de l'appareil correspond à une rotation des quatre roues dans le même sens et à la même vitesse, les⁻ quatre roues étant en contact avec la surface immergée.

Un dispositif selon l'invention permet de piloter manuellement un appareil selon l'invention. Un utilisateur 14 peut distinguer l'appareil 1 au fond du bassin 13 de piscine, de sorte à avoir un retour visuel du pilotage qu'il effectue de l'appareil.

Avantageusement, la commande de l'appareil est instinctive par l'inclinaison de la télécommande 15 vers l'avant pour commander l'appareil en marche avant, l'inclinaison de la télécommande vers l'arrière pour commander l'appareil en marche arrière, l'inclinaison de la télécommande vers la gauche pour commander l'appareil en rotation vers la gauche de l'appareil, l'inclinaison de la télécommande vers la droite pour commander l'appareil en rotation vers la droite de l'appareil.

La télécommande 15 peut être orientée dans toutes les directions, donnant un grand nombre de combinaisons de position de l'axe en tangage 26 et de l'axe en roulis 27 de la télécommande, mais le nombre de commandes de l'appareil est réduit. Le nombre de commandes distinctes dans le dispositif représenté aux figures 1 à 5 est de treize.

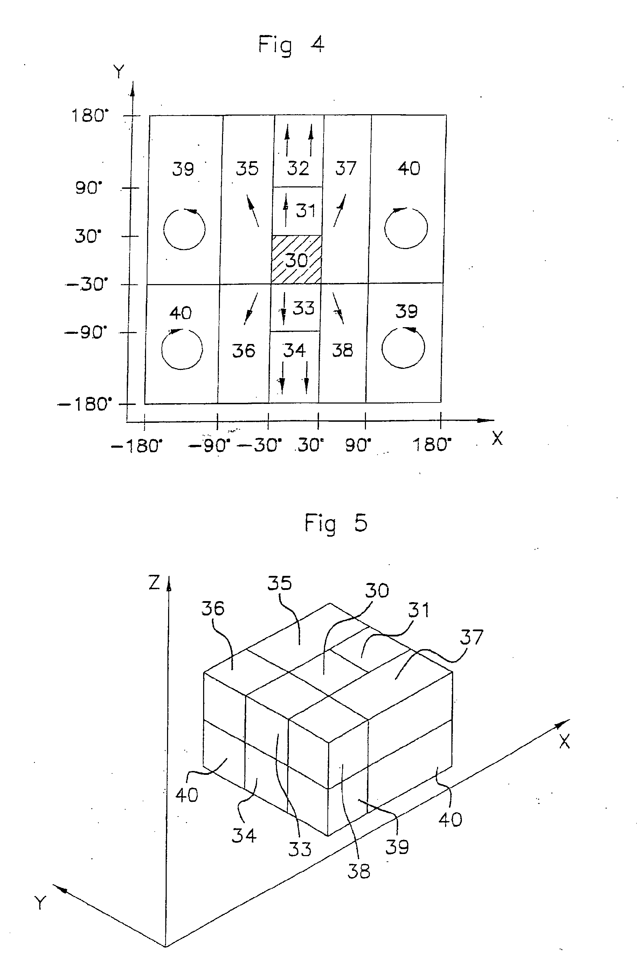

Ainsi à la figure 4, les treize commandes sont représentées en fonction des paramètres d'orientation que sont les mesures en tangage sur l'axe Y et en roulis sur l'axe X des inclinaisons de la télécommande.

Ainsi pour une inclinaison en roulis très forte à gauche ou à droite, c'est-à-dire comprise entre -180° et -90° ou respectivement entre 90° et 180°, l'unité de traitement 23 élabore une commande dépendante à la fois de la valeur en roulis et de la valeur en tangage de la télécommande. Si la télécommande est sensiblement verticale ou penchée vers l'avant (inclinaison en tangage comprise entre -30° et 180°, une commande respectivement de rotation sur place dans le sens horaire 39 (pour un observateur observant l'appareil nettoyeur du dessus) ou une commande dans le sens antihoraire 40 est élaborée. Si la télécommande est penchée vers l'arrière (inclinaison en tangage comprise entre -30° et -180°), une commande respectivement de rotation sur place dans le sens antihoraire 40 ou une commande dans le sens antihoraire 40 est élaborée.

Pour une inclinaison en roulis modérée à gauche ou à droite, c'est-à-dire comprise entre -90° et -30° ou entre 30° et 90°, l'unité de traitement 23 élabore une commande dépendante à la fois de la valeur en roulis et de la valeur en tangage de la télécommande. Si la télécommande est sensiblement verticale ou penchée vers l'avant (inclinaison en tangage comprise entre -10° et 180°, une commande respectivement de marche avant avec rotation à gauche 35 ou une commande de marche avant avec rotation à droite 37 est élaborée. Si la télécommande est penchée vers l'arrière (inclinaison en tangage comprise entre -30° et -180°), une commande respectivement de marche arrière avec rotation à gauche 36 ou une commande de marche arrière avec rotation à droite 38 est élaborée. La vitesse en marche arrière avec rotation est avantageusement unique.

Les commandes dans les sens horaire 39 et antihoraire 40 pour de fortes inclinaisons en roulis de la télécommande sont ainsi réparties pour qu'il existe une certaine continuité de mouvement entre chaque commande en marche avant/arrière avec rotation à gauche/droite et les rotations sur place en sens horaire/antihoraire.

Pour une inclinaison en roulis faible à gauche ou à droite, c'est-à-dire comprise entre -30° et 30°, l'unité de traitement 23 ignore l'inclinaison en roulis et ne considère que l'inclinaison en tangage de la télécommande. Ainsi, pour une inclinaison en tangage forte vers l'arrière (comprise entre -180° et -90°), l'unité de traitement 23 élabore une commande de marche arrière rapide 34. Pour une inclinaison en tangage modérée vers l'arrière (comprise entre -90° et -30°), l'unité de traitement 23 élabore une commande de marche arrière lente 33.

De même, pour une inclinaison en tangage modérée vers l'avant (comprise entre 30° et 90°), l'unité de traitement 23 élabore une commande de marche avant lente 31. Et pour une inclinaison en tangage forte vers l'avant (comprise entre 90° et 180°), l'unité de traitement 23 élabore une commande de marche avant rapide 32.

Enfin, pour toute inclinaison, en roulis et/ou en tangage, inférieure en valeur absolue à 30°, l'unité de traitement 23 élabore une commande d'immobilisation 30 de l'appareil 1.

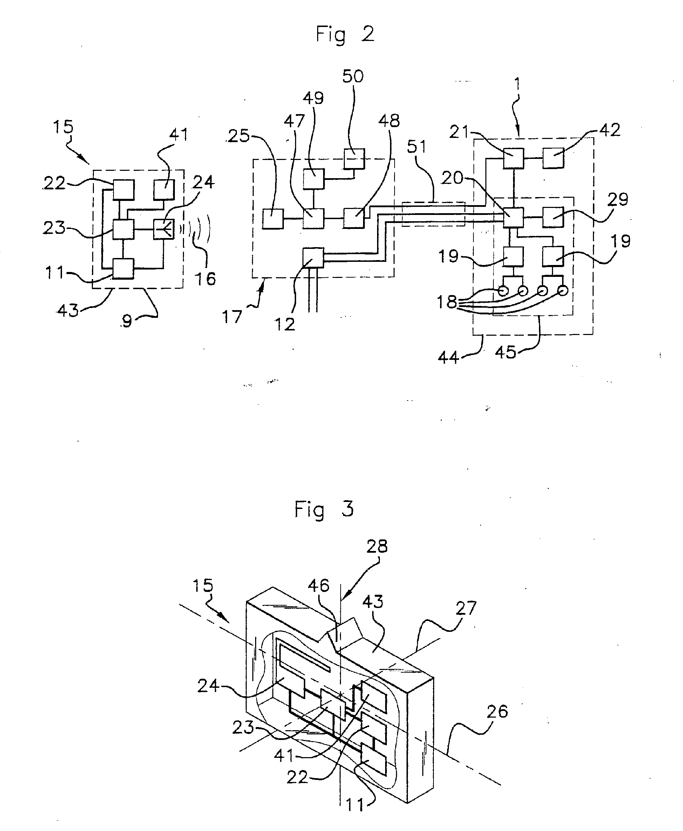

Dans une télécommande selon l'invention telle que représentée à la figure 3, le dispositif accélérométrique est disposé décalé selon un axe vertical 28 de la télécommande, par rapport aux centres de rotation des axes en tangage 26 et en roulis 27 de la télécommande. L'ensemble des positions mesurées par un tel dispositif lors de l'inclinaison de la télécommande en tangage et en roulis, est donc une sphère.

Ainsi, les valeurs d'inclinaison en tangage et en roulis sont représentées dans l'espace par des vecteurs normés à trois dimensions.

A la figure 5, un découpage de l'espace occupé par la sphère est représenté, qui correspond au découpage en deux dimensions représenté à la figure 4. Chaque portion de sphère est comprise dans un parallélépipède, et chaque parallélépipède correspond à une unique commande de pilotage de l'appareil. Ainsi, pour toutes valeurs d'inclinaison en tangage et en roulis d'une portion de sphère comprise dans un même parallélépipède, une même commande de pilotage de l'appareil est élaborée par l'unité de traitement 23.

Pour élaborer les signaux de commande appropriés, l'unité de traitement 23 de la télécommande 15 réalise des comparaisons successives des trois valeurs d'un vecteur représenté dans l'espace tridimensionnel X, Y, Z, par rapport à des valeurs de seuil correspondant aux limites représentées à la figure 5 entre chaque parallélépipède correspondant à une même commande. L'unité de traitement 23 met en oeuvre une méthode dite de machine d'états permettant de déterminer une commande correspondant à un vecteur fourni par le détecteur d'orientation 22, et permettant de détecter des transitions impossibles d'une commande à une autre ou des signaux erronés du détecteur d'orientation 22. En particulier un chronomètre est déclenché à chaque changement de commande, et tant qu'une durée prédéterminée - par exemple de l'ordre de 0,1 seconde de temps de filtrage - n'est pas écoulée, un second changement de commande ne peut être effectué, de sorte à limiter les commandes contradictoires envoyées à l'unité électronique de contrôle 21 dues par exemple à un utilisateur dont la main tremble, ou à une télécommande inclinée selon un angle limite (par exemple avec un roulis d'environ 30°).

Les valeurs des bornes des intervalles prédéterminés sont avantageusement enregistrées dans une mémoire non-volatile 41 lors d'une programmation d'usine juste après fabrication ou assemblage de la télécommande.

Par ailleurs, des données représentatives de programmes de nettoyage automatiques sont avantageusement enregistrées dans une mémoire 42 à bord de l'appareil - notamment dans le corps 44 de l'appareil - de façon à permettre à une unité électronique de contrôle 21 de l'appareil de mettre en oeuvre un tel programme de nettoyage en l'absence de pilotage par un utilisateur 14.

L'unité électronique de contrôle 21 est notamment adaptée pour inhiber tout programme de nettoyage automatique en cours dès réception de signaux de commande de pilotage.

L'unité électronique de contrôle 21 est reliée au convertisseur de puissance 20 du dispositif d'entraînement 45. Elle élabore et fournit à ce convertisseur de puissance 20 des commandes de puissance en fonction d'un programme automatique ou de commande de pilotage.

Le convertisseur de puissance 20 délivre une puissance électrique d'alimentation aux moteurs 19 du dispositif d'entraînement 45. Le convertisseur de puissance est adapté pour pouvoir délivrer une puissance électrique indépendante à chaque moteur 19 entraînant deux roues 18 latérales situées d'un même côté du corps 44 de l'appareil. En particulier un tel convertisseur peut fournir une puissance indépendante à chaque moteur 19.

En outre le convertisseur de puissance 20 délivre une puissance électrique d'alimentation sur commandes de l'unité électronique de contrôle 21 au moteur d'un dispositif de pompage 29 à bord du corps 44 de l'appareil nettoyeur. Le dispositif de pompage 29 permet de réaliser une circulation d'eau à travers une chambre de filtration interposée sur un circuit hydraulique de circulation de liquide entre une entrée de liquide dans le corps et une sortie de liquide hors du corps. La puissance de ce dispositif de pompage 29 est avantageusement utilisée en complément propulsif du dispositif d'entraînement, notamment grâce à une sortie de liquide avantageusement orientée ouverte vers l'arrière de l'appareil - cette sortie de liquide peut être choisie orientable et contrôlée par l'unité électronique de contrôle 21.

Pour mettre en oeuvre une commande de rotation sur place, les roues situées à gauche du corps de l'appareil sont entraînées à même vitesse et en sens contrarotatif par rapport aux roues situées à droite de l'appareil. De même, pour mettre en oeuvre une commande de marche avant avec rotation à droite par exemple, les quatre roues sont entraînées dans le même sens, mais les deux roues à droite du corps sont entraînées à une vitesse inférieure à la vitesse d'entraînement des roues situées à gauche du corps.

Le pilotage à distance selon l'invention permet une commande simple et intuitive d'un automobile nettoyeur de surface immergée. Le pilotage à distance selon l'invention permet aussi une grande diversité de trajectoires de l'appareil malgré un nombre restreint de commandes.

Ainsi à la figure 1, l'appareil menait un programme de nettoyage automatique selon une première portion 2 de trajectoire lorsqu'il a reçu, au point 3, des signaux 16 de commande de pilotage manuel par un utilisateur 14.

Au point 3, il a reçu une commande de rotation sur place à gauche 39 pendant 90°, puis il a reçu une commande de marche avant à vitesse lente 31 jusqu'au point 5, selon la deuxième portion 4 de trajectoire.

A partir du point 5, l'utilisateur a maintenu la télécommande en avant et l'a penchée modérément vers la gauche, de sorte que l'appareil reçoit une commande de marche avant avec rotation à gauche 35 selon la troisième portion 6 de trajectoire.

Au point 7, l'utilisateur a incliné la télécommande vers l'arrière et vers la droite, de sorte que l'appareil reçoit une commande de marche arrière avec rotation à droite 38 pour suivre une quatrième portion 8 de trajectoire.

Au point 9, l'utilisateur a accentué l'inclinaison de la télécommande à droite, de sorte que l'unité de traitement a ignoré l'inclinaison en tangage et a envoyé des signaux de commande représentatifs d'une commande en rotation sur place à droite 40 pendant 315°.

Puis l'utilisateur a penché la télécommande uniquement vers l'avant, de manière prononcée, de sorte que l'appareil a reçu une commande de marche avant rapide selon une cinquième portion 10 de trajectoire rectiligne.

Par ailleurs, le boîtier 43 de télécommande 15 est avantageusement étanche à l'eau. Le boîtier 43 de télécommande est aussi avantageusement de forme aplanie entre une face avant et une face arrière et présente une largeur et une hauteur différentes. Ainsi un utilisateur reconnait rapidement la forme de la télécommande et connait la position de repos correspondant à une commande d'immobilisation de l'appareil. Des inscriptions peuvent aussi distinguer la face avant de la face arrière et le sens normal (haut/bas, gauche/droite) d'utilisation de la télécommande. En particulier, dans le mode de réalisation particulier représenté à la figure 3, la télécommande présente un détrompeur 46 permettant de repérer rapidement le haut du bas de la télécommande et donc l'orientation au repos de la télécommande.

La télécommande est avantageusement facilement manoeuvrable par un utilisateur et présente des dimensions d'environ 120 mm x 80 mm x 20 mm pour un poids d'environ 130 grammes.

En outre la télécommande 15 est flottante, de sorte qu'un utilisateur peut l'utiliser tout en étant dans la piscine ou au bord de la piscine, et la récupérer facilement si elle tombe dans l'eau.

L'invention peut faire l'objet de nombreuses autres variantes de réalisation non représentées.

Rien n'empêche d'utiliser un dispositif accélérométrique simple ne comportant qu'un ou deux accéléromètres pour mesurer l'orientation d'un ou de deux axe(s) d'attitude de la télécommande. Par exemple une télécommande très simple à un seul axe d'attitude permet de commander l'appareil en marche avant et en marche arrière. On peut dans ce cas prévoir une giration en lacet automatique (électroniquement ou mécaniquement) dans un sens prédéterminé lors de la marche arrière, de façon à pouvoir réorienter l'appareil.

A des fins de simplification, seuls les éléments essentiels à l'invention ont été représentés de façon schématique, cependant, de nombreux autres éléments, notamment des éléments électroniques aux figures 2 et 3, peuvent être ajoutés à la télécommande, au relais intermédiaire et à l'appareil nettoyeur.

## Revendications

1. Dispositif de pilotage à distance d'un appareil (1) automobile nettoyeur de surface immergée, ledit appareil (1) comprenant :
- un corps (44),
- un dispositif d'entraînement (45) comprenant des organes (18) de guidage et d'entraînement adaptés pour entraîner et guider le corps (44) sur la surface immergée selon au moins une direction, dite direction longitudinale, et selon au moins deux modes de déplacement distincts,
ledit dispositif de pilotage à distance :
- comprenant un terminal (15) de pilotage comportant au moins un boîtier (43),
- étant adapté pour pouvoir élaborer et transmettre au dispositif d'entraînement (45), via une liaison de communication, des signaux de commande (16) du dispositif d'entraînement (45),
**caractérisé en ce que** :
- au moins un boîtier (43) comprend un détecteur d'orientation (22), solidaire dudit boîtier, et adapté pour fournir des signaux représentatifs d'au moins un paramètre d'orientation du boîtier,
- il comprend en outre une unité de traitement (23) des signaux fournis par le détecteur d'orientation (22), adaptée pour élaborer des signaux de commande représentatifs :
• d'une première commande du dispositif d'entraînement (45) pour un paramètre d'orientation compris dans un premier intervalle de valeurs prédéterminé,
• d'une deuxième commande du dispositif d'entraînement (45), distincte de la première commande, pour un paramètre d'orientation compris dans un deuxième intervalle de valeurs prédéterminé, disjoint du premier intervalle.

2. Dispositif selon la revendication 1, **caractérisé en ce que** l'unité de traitement (23) est adaptée pour élaborer des signaux de commande représentatifs d'une commande prédéterminée du dispositif d'entraînement (45) pour au moins un paramètre d'orientation compris dans un intervalle de valeurs prédéterminé, l'intervalle étant un intervalle d'un groupe d'intervalles disjoints, le groupe d'intervalles couvrant l'ensemble des valeurs pouvant être atteintes par ledit paramètre d'orientation.

3. Dispositif selon l'une des revendications 1 ou 2, **caractérisé en ce qu'**un premier paramètre d'orientation dudit boîtier (43) est une mesure en tangage du boîtier.

4. Dispositif selon la revendication 3, **caractérisé en ce que** l'unité de traitement (23) est adaptée pour pouvoir élaborer des signaux de commande représentatifs :
- d'une première commande correspondant à un entraînement du corps (44) dans un premier sens selon la direction longitudinale, pour une mesure en tangage dudit boîtier (43) comprise dans un premier intervalle de valeurs prédéterminé,
- d'une deuxième commande correspondant à une immobilisation du corps, pour une mesure en tangage dudit boîtier (43) comprise dans un deuxième intervalle de valeurs prédéterminé, différent du premier intervalle,
- d'une troisième commande correspondant à un entraînement du corps dans un second sens, opposé au premier sens, selon la direction longitudinale, pour une mesure en tangage dudit boîtier (43) comprise dans un troisième intervalle de valeurs prédéterminé, différent du premier et du deuxième intervalle.

5. Dispositif selon l'une des revendications 1 à 4, **caractérisé en ce qu'**un deuxième paramètre d'orientation dudit boîtier (43) est une mesure en roulis du boîtier.

6. Dispositif selon la revendication 5, **caractérisé en ce que** l'unité de traitement (23) est adaptée pour pouvoir élaborer des signaux de commande représentatifs :
- d'une première commande correspondant à un guidage du corps (44) dans un premier sens de giration en lacet, pour une mesure en roulis dudit boîtier (43) comprise dans un premier intervalle de valeurs prédéterminé,
- d'une deuxième commande correspondant à un guidage du corps tout droit selon la direction longitudinale, sans giration en lacet, pour une mesure en roulis dudit boîtier (43) comprise dans un deuxième intervalle de valeurs prédéterminé, différent du premier intervalle,
- d'une troisième commande correspondant à un guidage du corps dans un second sens de giration en lacet, opposé au premier sens de giration, pour une mesure en roulis dudit boîtier (43) comprise dans un troisième intervalle de valeurs prédéterminé, différent du premier et du deuxième intervalle.

7. Dispositif selon l'une des revendications 1 à 6, **caractérisé en ce que** ledit détecteur d'orientation (22) est un dispositif accélérométrique.

8. Dispositif selon l'une des revendications 1 à 7, **caractérisé en ce que** chaque boîtier (43) comprenant un détecteur d'orientation (22) est aussi doté de :
- une unité de traitement (23),
- un émetteur (24) sans fil relié à l'unité de traitement et adapté pour émettre sans fil des signaux de commande élaborés par l'unité de traitement.

9. Appareil (1) automobile nettoyeur de surface immergée comprenant :
- un corps (44),
- un dispositif d'entraînement (45) comprenant des organes (18) de guidage et d'entraînement adaptés pour entraîner et guider le corps sur la surface immergée selon au moins une direction, dite direction longitudinale, et selon au moins deux modes de déplacement distincts,
- un dispositif de pilotage à distance de l'appareil selon l'une des revendications 1 à 8,
- une liaison de communication entre ledit dispositif de pilotage à distance et ledit dispositif d'entraînement adapté pour permettre au moins la transmission de signaux de commande entre le dispositif de pilotage à distance et le dispositif d'entraînement.

## Patentansprüche

1. Vorrichtung zur Fernlenkung eines fahrbaren Geräts (1) zur Reinigung einer Unterwasserfläche, wobei das Gerät (1) enthält:
- einen Körper (44),
- eine Antriebsvorrichtung (45), die Führungs- und Antriebsorgane (18) enthält, welche geeignet sind, den Körper (44) auf der Unterwasserfläche gemäß mindestens einer Richtung, Längsrichtung genannt, und gemäß mindestens zwei unterschiedlichen Verschiebungsarten anzutreiben und zu führen,
wobei die Fernlenkvorrichtung:
- ein Lenkungs-Endgerät (15) enthält, das mindestens ein Gehäuse (43) aufweist,
- geeignet ist, Steuersignale (16) der Antriebsvorrichtung (45) erarbeiten und über eine Kommunikationsverbindung an die Antriebsvorrichtung (45) übertragen zu können, **dadurch gekennzeichnet, dass**:
- mindestens ein Gehäuse (43) einen Ausrichtungsdetektor (22) enthält, der fest mit dem Gehäuse verbunden und geeignet ist, für mindestens einen Ausrichtungsparameter des Gehäuses repräsentative Signale zu liefern,
- sie außerdem eine Verarbeitungseinheit (23) der vom Ausrichtungsdetektor (22) gelieferten Signale enthält, die geeignet ist, Steuersignale zu erarbeiten, die repräsentativ sind für:
• eine erste Steuerung der Antriebsvorrichtung (45) für einen in einem vorbestimmten ersten Wertebereich liegenden Ausrichtungsparameter,
• eine zweite Steuerung der Antriebsvorrichtung (45), unterschiedlich von der ersten Steuerung, für einen Ausrichtungsparameter, der in einem zweiten vorbestimmten Wertebereich liegt, der vom ersten Bereich getrennt ist.

2. Vorrichtung nach Anspruch 1, **dadurch gekennzeichnet, dass** die Verarbeitungseinheit (23) geeignet ist, Steuersignale zu erarbeiten, die für eine vorbestimmte Steuerung der Antriebsvorrichtung (45) für mindestens einen in einem vorbestimmte Wertebereich liegenden Ausrichtungsparameter repräsentativ sind, wobei der Bereich ein Bereich einer Gruppe von getrennten Bereichen ist, wobei die Gruppe von Bereichen die Gesamtheit der Werte abdeckt, die vom Ausrichtungsparameter erreicht werden können.

3. Vorrichtung nach einem der Ansprüche 1 oder 2, **dadurch gekennzeichnet, dass** ein erster Ausrichtungsparameter des Gehäuses (43) ein Nickmesswert ist.

4. Vorrichtung nach Anspruch 3, **dadurch gekennzeichnet, dass** die Verarbeitungseinheit (23) geeignet ist, repräsentative Steuersignale zu erarbeiten für:
- eine erste Steuerung entsprechend einem Antrieb des Körpers (44) in einer ersten Richtung gemäß der Längsrichtung, für einen Nickmesswert des Gehäuses (43) in einem ersten vorbestimmte Wertebereich,
- eine zweite Steuerung entsprechend einem Stillstand des Körpers, für einen Nickmesswert des Gehäuses (43) in einem zweiten vorbestimmten Wertebereich, der sich vom ersten Bereich unterscheidet,
- eine dritte Steuerung entsprechend einem Antrieb des Körpers in einer zweiten Richtung, entgegengesetzt zur ersten Richtung, in der Längsrichtung, für einen Nickmesswert des Gehäuses (43) in einem dritten vorbestimmten Wertebereich, der sich vom ersten und zweiten Bereich unterscheidet.

5. Vorrichtung nach einem der Ansprüche 1 bis 4, **dadurch gekennzeichnet, dass** ein zweiter Ausrichtungsparameter des Gehäuses (43) eine Wankmesswert des Gehäuses ist.

6. Vorrichtung nach Anspruch 5, **dadurch gekennzeichnet, dass** die Verarbeitungseinheit (23) geeignet ist, repräsentative Steuersignale zu erarbeiten für:
- eine erste Steuerung entsprechend einer Führung des Körpers (44) in einer ersten Gier-Kreisbewegungsrichtung für einen Wankmesswert des Gehäuses (43) in einem ersten vorbestimmten Wertebereich,
- eine zweite Steuerung entsprechend einer Führung des Körpers geradeaus in der Längsrichtung, ohne Gier-Kreisbewegung, für einen Wankmesswert des Gehäuses (43) in einem zweiten vorbestimmten Wertebereich, der sich vom ersten Bereich unterscheidet,
- eine dritte Steuerung entsprechend einer Führung des Körpers in einer zweiten Gier-Kreisbewegungsrichtung, entgegengesetzt zur ersten Kreisbewegungsrichtung, für einen Wankmesswert des Gehäuses (43) in einem dritten vorbestimmten Wertebereich, der sich vom ersten und vom zweiten Bereich unterscheidet.

7. Vorrichtung nach einem der Ansprüche 1 bis 6, **dadurch gekennzeichnet, dass** der Ausrichtungsdetektor (22) eine Beschleunigungsmessvorrichtung ist.

8. Vorrichtung nach einem der Ansprüche 1 bis 7, **dadurch gekennzeichnet, dass** jedes Gehäuse (43), das einen Ausrichtungsdetektor (22) enthält, auch ausgestattet ist mit:
- einer Verarbeitungseinheit (23),
- einem drahtlosen Sender (24), der mit der Verarbeitungseinheit verbunden und geeignet ist, drahtlos Steuersignale zu senden, die von der Verarbeitungseinheit erarbeitet werden.

9. Fahrbares Gerät (1) zur Reinigung einer Unterwasserfläche, das enthält:
- einen Körper (44),
- eine Antriebsvorrichtung (45), die Führungs- und Antriebselemente (18) enthält, welche geeignet sind, den Körper auf der Unterwasserfläche gemäß mindestens einer Richtung, Längsrichtung genannt, und gemäß mindestens zwei unterschiedlichen Verschiebungsarten anzutreiben und zu führen,
- eine Fernsteuerungsvorrichtung des Geräts nach einem der Ansprüche 1 bis 8,
- eine Kommunikationsverbindung zwischen der Fernsteuerungsvorrichtung und der Antriebsvorrichtung, die geeignet ist, mindestens die Übertragung von Steuersignalen zwischen der Fernsteuerungsvorrichtung und der Antriebsvorrichtung zu erlauben.

## Claims

1. Device for remotely controlling an automotive submerged surface cleaning apparatus (1), said apparatus (1) comprising:
- a body (44),
- a driving device (45) comprising guiding and driving members (18) suitable for driving and guiding the body (44) over the submerged surface in at least one direction, called longitudinal direction, and in at least two distinct displacement modes,
said remote control device:
- comprising a control terminal (15) comprising at least one casing (43),
- being designed to be able to generate and transmit to the driving device (45), via a communication link, control signals (16) for the driving device (45),
**characterized in that**:
- at least one casing (43) comprises an orientation detector (22), secured to said casing, and designed to supply signals representative of at least one orientation parameter of the casing,
- it further comprises a processing unit (23) for the signals supplied by the orientation detector (22), designed to generate control signals representative:
• of a first control of the driving device (45) for an orientation parameter lying within a first predetermined range of values,
• of a second control of the driving device (45), distinct from the first control, for an orientation parameter lying within a second predetermined range of values, separate from the first interval.

2. Device according to Claim 1, **characterized in that** the processing unit (23) is designed to generate control signals representative of a predetermined control of the driving device (45) for at least one orientation parameter lying within a predetermined range of values, the range being a range of a group of separate ranges, the group of ranges covering all the values that can be reached by said orientation parameter.

3. Device according to one of Claims 1 or 2, **characterized in that** a first orientation parameter of said casing (43) is a casing pitch measurement.

4. Device according to Claim 3, **characterized in that** the processing unit (23) is designed to be able to generate control signals representative:
- of a first control corresponding to a driving of the body (44) in a first direction in the longitudinal direction, for a pitch measurement of said casing (43) lying within a first predetermined range of values,
- of a second control corresponding to an immobilization of the body, for a pitch measurement of said casing (43) lying within a second predetermined range of values, different from the first range,
- of a third control corresponding to a driving of the body in a second direction, opposite to the first direction, in the longitudinal direction, for a pitch measurement of said casing (43) lying within a third predetermined range of values, different from the first range and from the second range.

5. Device according to one of Claims 1 to 4, **characterized in that** a second orientation parameter of said casing (43) is a roll measurement of the casing.

6. Device according to Claim 5, **characterized in that** the processing unit (23) is designed to be able to generate control signals representative:
- of a first control corresponding to a guiding of the body (44) in a first yawing swing direction, for a roll measurement of said casing (43) lying within a first predetermined range of values,
- of a second control corresponding to a guiding of the body straight in the longitudinal direction, without yawing swing, for a roll measurement of said casing (43) lying within a second predetermined range of values, different from the first range,
- of a third control corresponding to a guiding of the body in a second yawing swing direction, opposite to the first swing direction, for a roll measurement of said casing (43) lying within a third predetermined range of values, different from the first range and from the second range.

7. Device according to one of Claims 1 to 6, **characterized in that** said orientation detector (22) is an accelerometric device.

8. Device according to one of Claims 1 to 7, **characterized in that** each casing (43) comprising an orientation detector (22) is also provided with:
- a processing unit (23),
- a wireless transmitter (24) linked to the processing unit and designed to wirelessly transmit control signals generated by the processing unit.

9. Automotive submerged surface cleaning apparatus (1) comprising:
- a body (44),
- a driving device (45) comprising guiding and driving members (18) which drive and guide the body over the submerged surface in at least one direction, called longitudinal direction, and in at least two distinct displacement modes,
- a remote control device for the apparatus according to one of Claims 1 to 8,
- a communication link between said remote control device and said driving device designed to allow at least the transmission of control signals between the remote control device and the driving device.
